# EUROPEAN PATENT APPLICATION

(11) **EP 2 198 724 A2**
(43) Date of publication of application: **23.06.2010**
(21) Application number: 09252834.8
(22) Date of filing: 18.12.2009
(51) Int. Cl.: A23L 3/3508, A23L 1/24, A23B 5/14, A23B 5/18, A23J 1/08, A23L 1/03, A23L 1/32

(54) **Oxidation stability using natural antioxidants**

(30) Priority: 19.12.2008 US 139315 P
(71) Applicant: Kraft Foods Global Brands LLC, Northfield, IL 60093 (US)
(72) Inventor: Lis, Daniel G., Round Lake Illinois 60073 (US); Hu, Kang, Glenview Illinois 60025 (US); Lau, Ming H., Glenview Illinois 60025 (US); Turek, Evan J., Libertyville Illinois 60048 (US); Class, Robert F., Winthrop Harbor Illinois 60096 (US); Antoniewski, Marie M., Chicago Illinois 60640 (US)
(74) Representative: Setna, Rohan P.

(57) **Abstract**

Comestibles including natural antioxidants as a natural replacer for EDTA, food ingredients having reduced oxidative activity, and methods of use thereof are provided.

## Description

### CROSS REFERENCE TO RELATED APPLICATION

This application claims benefit of United States Provisional Application Number 61/139,315, filed December 19, 2008, which is hereby incorporated herein by reference in its entirety.

### FIELD

The field relates to natural antioxidants, and in particular, natural antioxidants in comestibles.

### BACKGROUND

Oxidation is a process that occurs in food products, causing foods to spoil and become unpleasing in taste and appearance. Oxidation reactions may occur when chemicals in food are exposed to oxygen in the air and free radicals are formed. It has been shown that free radicals may naturally occur, at least in part, due to the presence of iron- or copper-ion catalysts. Under normal conditions, animal and plant tissues naturally contain antioxidants which prevent oxidative damage. However, in foods many of these naturally occurring antioxidants break down and no longer impart their protective properties to the food. Oxidation of fat and oil in food can lead to rancidity and, in fruit, can cause discoloration.
This oxidation ultimately leads to spoilage of the food and a corresponding loss of nutritional value and favorable organoleptic properties. As a result, removing free metal ions, such as iron and copper ions, present in food products can result in oxidative stability to foods that are more resistant to spoilage and have preserved flavor quality and improved color retention.

Traditionally, ethylenediaminetetraacetic acid or EDTA has been used in food and beverage products to prevent oxidation and spoilage due to its capacity to chelate metals.
This material generally enjoys widespread use in industry, medicine, and laboratory science due to its relatively high capability to chelate metal ions. In the food and beverage industry, EDTA is often used to protect products from oxidation and spoilage and to improve flavor quality and color retention. EDTA, however, is categorized as a synthetic or artificial ingredient.

Recently, there have been increased desires for the removal of so called artificial ingredients in food and beverage products and their replacement with natural alternatives. For example, artificial preservatives, colors and flavors have been successfully replaced, in some instances, with natural counterparts. Owing to its effectiveness, reasonable cost, and lack of viable alternatives, however, EDTA has so far been one of the more difficult artificial ingredients to replace. Additionally, in some countries, the use of EDTA is prohibited. Attempts so far to replace or remove EDTA from foods and beverages have thus far yielded somewhat disappointing results. For example, naturally produced siderophores (from yeast and fungi) are effective metal chelators, but unacceptably add color to foods and beverages.

Additionally, less effective botanical extracts have been utilized to improve the oxidative stability of food products. However, typical extracts may have as little as 2 percent of the effective compound, if the compound is even known. These extracts may further contain additional non-effective compounds that impart an undesirable flavor, color, or texture. An example of such an extract is rosemary extract, which has antioxidant properties; however, a rosemary extract incorporated into a food or beverage for its antioxidant properties also imparts a distinct rosemary taste, which is undesirable in most situations. Therefore it is desired to provide natural ingredients for foods and beverages which have antioxidant characteristics, are relatively free of additional, non-effective compounds and do not adversely affect the organoleptic qualities of the food or beverage.

Egg is a widely applied ingredient in the food industry, and is a required ingredient in certain products, such as mayonnaise where it provides flavor and functions as an emulsifier. However, the relatively high level of metal ions, particularly iron, present in egg, and particularly in egg yolk, accelerates lipid oxidation and thus limits the shelf-life of oil-containing products. To counteract the oxidative nature of the iron, often a chelating agent, such as calcium EDTA or disodium EDTA, is added. Generally, a mayonnaise product not containing EDTA is considered to be shelf-stable for a period of 3-4 months. When EDTA is added to the mayonnaise, the shelf-life is generally extended to about 9-12 months. However, as previously noted, it is desirable to provide oxidatively stable foods and beverages that do not require the use of EDTA but will still retain the extended shelf-life presently afforded by the use of chemical preservatives.

U.S. Patent Nos. 5,626,901 and 5,641,533 to Ambjerg Pederson describe the formation of no and low fat salad dressing and mayonnaise compositions by using a non-amidated or amidated galacturonic acid methyl ester as a fat replacement so as to avoid oxidation and esterification of fat and oil compounds normally present in the products. However, these low and no fat products are often not acceptable to the consumer. Therefore, it is also advantageous to provide food ingredients, such as eggs, with reduced levels of metal ions relative to the high amounts of metal ions naturally present in said ingredients so as to prevent oxidation that normally occurs due to the naturally high levels of metal ions present in certain ingredients.

Various methods have discloses for separation of protein components from egg yolk. U.S. Patent No. 6,217,926 to Merkle et al. describes methods of selectively removing phospholipids from egg yolk by adjusting the pH and salts of an egg yolk dilution and then subjecting the mixture to centrifugation to obtain a phospholipid extract. U.S. Patent No. 5,907,035 to Guinn describes an aqueous two-phase metal affinity protein partitioning purification system involving the use of salts and inert hydrophobic molecules, such as polymers to create a two phase system and the use of a polymer-chelator-metal complex to purify the target proteins. U.S. Patent No. 5,665,868 to Ramadoss et al. describes the use of a chromatographic agent in a suitable matrix to remove metals from proteins and polypeptides. Specifically, Ramadoss describes the use of phosvitin bound to a suitable matrix to remove metals from other biological materials. U.S. Patent No. 3,958,034 to Nath et al. discloses pooling egg yolks and using ultracentrifugation at 60,000 x g for 24 hours at 0°C in order to obtain a fractionated egg yolk product having cholesterol, fat, and protein fractions.

### SUMMARY

Comestibles having oxidation stability using natural antioxidants are provided. In one aspect, lipid containing substances having antioxidative properties are provided where an oil and a hydrolyzed polysaccharide having acid side chain groups obtained by hydrolysis of carageenans, alginates, pectins, or mixtures thereof are combined and the amount of hydrolyzed polysaccharide is effective to provide oxidative stability to the lipid containing substance. Preferably, the hydrolyzed polysaccharide has a chain length of about 2 to about 4 glucose units and an average molecular weight of about 200 to about 900 Daltons. Preferably, the hydrolyzed polysaccharide comprises about 0.2 to about 2.5 weight percent of the lipid containing substance and is oxidatively stable for at least about 24 weeks. Preferably, the lipid containing substance is essentially free of EDTA.

In another aspect, an oxidatively stable comestible base is also provided where a hydrolyzed polysaccharide having acid side chain groups is blended into a comestible base in an amount effective to provide oxidative stability therein, and the oxidatively stable comestible is substantially free of EDTA. Additionally, the presence of the hydrolyzed polysaccharide does not adversely affect the organoleptic properties of the oxidatively stable comestible. For example, the hydrolyzed polysaccharide does not substantially thicken the comestible. By one approach, the hydrolyzed polysaccharide is hydrolyzed alginate, hydrolyzed carageenan, hydrolyzed pectin, or mixtures thereof. Preferably, the comestible base is a food, a beverage, or a pharmaceutical. The oxidatively stable comestible is preferably a salad dressing and more preferably, a mayonnaise.

In yet another aspect, a method of preparing an oxidatively stable, hydrolyzed polysaccharide containing product is provided. A product is first provided, the product being selected from a food, a beverage, and a pharmaceutical and combined with an amount of hydrolyzed polysaccharide. The hydrolyzed polysaccharide is selected from hydrolyzed alginate, hydrolyzed carageenan, hydrolyzed pectin, and mixtures thereof in an amount effective to reduce oxidation similar to the product having EDTA and wherein the product is substantially free of EDTA. In one aspect, the hydrolyzed polysaccharide is added during formation of the product. In another aspect, the hydrolyzed polysaccharide is added after formation of the product. Preferably, the product is a salad dressing and more preferably the product is a mayonnaise.

A method of preparing an iron-reduced egg yolk is provided. By one approach, a volume of egg yolk may be first combined with about one volume of water. The pH of this mixture may then be adjusted to about 6.8 using a food-grade acidulant. To this pH adjusted mixture, sodium chloride may be added and the mixture is then subjected to intense centrifugation to provide an iron-rich phosvitin fraction. Removal of the iron-rich phosvitin fraction leaves an iron-reduced egg yolk having an iron content reduced by at least about 50 percent, and in some cases at least about 80 percent. The iron-reduced egg yolk can then be incorporated into a food or beverage.

A further method of additionally processing the iron-rich phosvitin fraction to produce an iron-reduced, phosvitin-rich egg yolk is provided so that the functional benefits of phosvitin (i.e., texture, emulsification, etc.) may be obtained without negative effects on oxidative stability due to the iron in the phosvitin. Moreover, it has been discovered that the iron-reduced phosvitin prepared by the methods herein actually increase oxidation stability even if the modified phosvitin still includes low residual levels of iron. This result is opposite than would be expected from using phosvitin having an amount of iron therein.

By one approach, the iron-rich phosvitin fraction may be first suspended in water and about 0.25 to about 0.5 percent parts iron sequestering agent (based on total weight) to form a suspension. This suspension may be held for a period of time sufficient to strip a portion of the iron from the phosvitin and then centrifuged to form an iron-reduced phosvitin. Additionally, the pH of the suspension may be reduced, for example to a pH of about 2.8, using an acceptable food grade acidulant to aid in the stripping of the iron from the phosvitin protein. Preferably, the acidulant is hydrochloric acid. The iron-reduced phosvitin precipitate may then be washed and centrifuged one or more times until the iron content is below about 40 ppm (dry basis) and the iron sequestering agent content is below about 500 ppm. In some cases, after washing one or both of the iron and/or iron sequestrant agent can be so low that they cannot be detected. The iron-reduced phosvitin can then be re-incorporated back into the iron-reduced egg yolk to provide the iron-reduced, phosvitin-rich egg yolk. The iron-reduced, phosvitin rich egg yolk can then be incorporated into a food or beverage to provide a natural antioxidant. Alternatively, the iron-reduced phosvitin can be incorporated directly into a food or beverage. Moreover, this method is distinct from the prior art because while many references recognize phosvitin as a protein component of the yolk, it is not disclosed in previous methods that iron can be stripped from the phosvitin and the phosvitin returned to the egg yolk. Furthermore, by permanently removing the protein component from egg yolk, some or all of the functional purpose of the egg yolk ingredient may be lost. For example, it is the protein component that tends to provide the emulsification property to egg yolk. The methods herein avoid these shortcomings.

The present disclosure is especially suited for preparing oxidatively stable salad dressing and mayonnaise products using natural antioxidants in place of EDTA. Generally, such natural antioxidants are included in salad dressing and mayonnaise products at a level sufficient to extend the shelf-life of the product up to six months and, preferably up to one year. By one approach, the iron-reduced phosvitin may be added back to the egg yolk in the same ratio as it exists in and is recovered from the egg. By adding back the phosvitin stoichiometrically, it is believed the iron-reduced, phosvitin-rich egg yolk may provide emulsification properties similar to that of the untreated egg yolk. If the iron-reduced phosvitin is used separate from the egg, it could be added at a lower level corresponding to its iron binding capacity and the amount of iron that needs to be removed or bound in the product of interest.

### BRIEF DESCRIPTION OF THE DRAWINGS

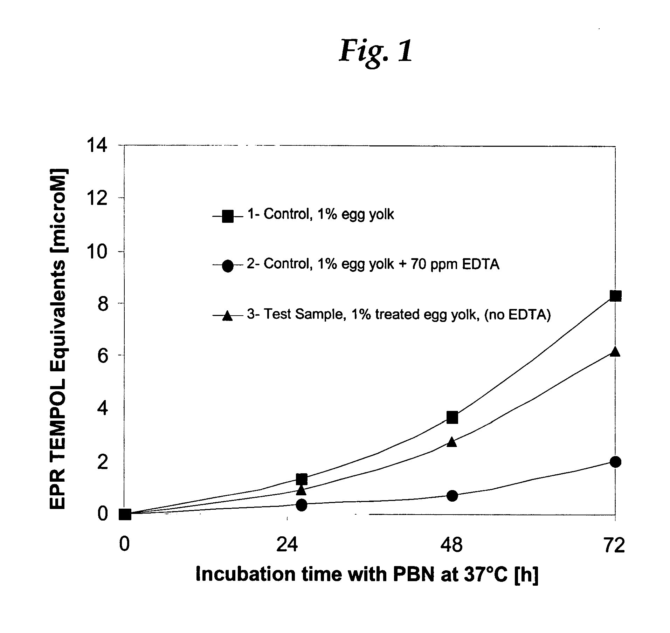

FIG. 1 is a graph of free radical formation as a function of time in ranch-style salad dressing containing egg yolk.

### DETAILED DESCRIPTION OF THE PREFERRED EMBODIMENT

Foods and beverages including naturally occurring antioxidants are provided. For purposes of this disclosure, "natural ingredients" are intended to include substances that are of a plant or animal nature. The natural ingredients of this disclosure may be unprocessed relative to the normal state of the ingredient as it is obtained from the plant or animal. The desired natural ingredient may alternatively be obtained or isolated by using mechanical or chemical separation techniques. For example, mechanical separation may include macroscopic separation of individual components (e.g., egg yolk and egg white) and centrifugation, while chemical separation may, for example, include pH induced precipitation. Additionally, the natural ingredients may undergo processing to further purify or enhance the antioxidant properties of the natural ingredient. For purposes of this disclosure, the term "processing" when used in reference to processing of the natural ingredients, is intended to include, but not be limited to partial to complete hydrolysis of the natural ingredient.

For the purpose of this disclosure, foods or beverages are generally intended to include any and all foods, food products, beverages, or beverage products that have, or could have, EDTA included as a preservative, an antioxidant, or for its metal chelating ability and are intended for animal or human consumption. Furthermore, it is intended that the terms food and beverage may also include other consumable products, including but not limited to, pharmaceuticals, health products, vitamins, and the like. For purposes of this disclosure, when it is stated that the incorporation of the natural ingredient into the food or beverage does not adversely affect the organoleptic properties of the food or beverage, it is intended that the natural ingredient does not adversely add undesired color, flavor, odors, and/or texture to the food or beverage.

By one approach, the natural ingredient may be added to foods or beverages in methods similar to how EDTA is conventionally added to a food or beverage. For example, the natural ingredient may be added with other ingredients during the formation of the food or beverage or, by other approaches, may also be added after the final formation of the product. Specifically, the natural ingredient may be added to the food or beverage in an amount effective to prevent levels of oxidation of the food or beverage similar to antioxidation effects obtained when EDTA was used instead. For example, the natural ingredient can be used in oil containing mayonnaise and salad dressing products. Not wishing to be limited by theory, it is believed that the natural ingredient chelates, and thereby reduces the amount of free metal ions in the aqueous phase, thereby reducing oxidation. The natural ingredient may also be used in beverages with flavor systems that may have a sensitivity to oxidative decomposition such as lemon flavors. Additionally, the natural ingredients of this disclosure may be used in dietary supplements as a method of chelating heavy metals.

In one embodiment, the natural ingredient is hydrolyzed polysaccharides having side chain acid groups, a natural source, which are incorporated into a food or beverage to provide oxidative stability in place of an artificial or synthetic antioxidant, such as EDTA, while not adversely affecting the organoleptic properties of the food or beverage. The hydrolyzed polysaccharides have a plurality of side chains containing acid groups, such as carboxylic acids. Not wishing to be limited by theory, it is believed that these side chain acid groups bind pro-oxidative material (i.e., metal ions) in the food and provide an antioxidant effect to the food product so that the food product is oxidatively stable under room conditions (70-75°F) for at least about 24 weeks. It has been discovered that hydrolyzed polysaccharides that do not have side chains with acid groups (such as, for example, xanthan gum) generally will not function as a natural antioxidant. Preferably, the hydrolyzed polysaccharides with the side chain acid groups have about 2 to about 4 glucose units and an average molecular weight of about 300 to about 900 Daltons. More preferably, the hydrolyzed polysaccharides are selected from the group including hydrolyzed alginate, hydrolyzed carageenan, hydrolyzed pectin, or mixtures thereof.

While non-hydrolyzed alginate, carageenan, and pectin are typically used as thickening agents in food products, it has been discovered that non-hydrolyzed alginate, carageenan, and pectin generally would not be expected to impart antioxidant properties, if at all, without also adversely affecting other organoleptic properties (such as texture and thickness). The thickening characteristic of these non-hydrolyzed polysaccharides arises from the creation of ion bridging between the very long, non-hydrolyzed polysaccharide chains. The bridging of these non-hydrolyzed polysaccharides results in an extremely large matrix of these long chains of polysaccharides, which thereby thicken the product. At amounts that non-hydrolyzed polysaccharides are traditionally used in foods for thickening, little to no antioxidant affect is imparted to the food product. If the amounts of these non-hydrolyzed polysaccharides were increased in the food product, negative organoleptic properties would result (i.e., over-thickening the product). Not wishing to be limited by theory, it is believed that when these polysaccharides are hydrolyzed, more free carboxylic acids ends are formed, and therefore more bonding sites are provided for bonding pro-oxidative material present in the food product. However, surprisingly it has been discovered that these hydrolyzed polysaccharides do not substantially thicken the food product.

For example, Kraft Real Mayonnaise (Kraft Foods, Northfield, Illinois) was formulated and separated into three samples. The first was used as a control and the remaining two samples had 0.35 weight percent of hydrolyzed alginate or non-hydrolyzed sodium alginate added to the formulation. The hydrolyzed alginate was hydrolyzed as described above. Sodium alginate is a typical polysaccharide used to thicken or otherwise modify texture of food products. As shown in Table 1, the sample containing the hydrolyzed alginate has a yield stress similar to the control sample and therefore is not considered to be a thickening agent. The hydrolyzed alginate, thus, does not adversely affect the organoleptic characteristics of the mayonnaise because it does not substantially change the viscosity or texture. Hydrolyzed carageenan and hydrolyzed pectin are expected to behave in a similar manner. In general, it is believed the hydrolyzed polysaccharides herein will not affect the yield stress of a product by greater than about 10 percent. The non-hydrolyzed sodium alginate sample displayed greatly increased thickening as shown in the dramatically increased yield stress value over the control sample. Thus, the non-hydrolyzed alginate is not suitable as a natural antioxidant because it severely impacts the organoleptic characteristics of the food. Non-hydrolyzed carageenan and non-hydrolyzed pectin are expected to behave in a similar manner.

**Table 1**

| Ingredient | Yield Stress (Pas) | % Change from Control |
|---|---|---|
| Control | 246 | -- |
| 0.35% Hydrolyzed Alginate | 266 | 8% |
| 0.35% Non-Hydrolyzed Sodium Alginate | 361 | 47% |

Not only are non-hydrolyzed forms of alginate, carageenan, and pectin not acceptable as naturally antioxidants because they adversely affect the food's organoleptic properties, they cannot be used in certain foods, such as mayonnaise, per FDA regulations. Based on United States Food and Drug Administration regulations, certain foods are not permitted to contain stabilizers and thickeners. Specifically, mayonnaise, as described in 21 C.F.R. § 169.140 does not include stabilizers and thickeners, but can include a sequestrant, in the allowed list of ingredients. If a manufacturer wishes to produce and market a product as mayonnaise, only those ingredients listed in the regulation may be included in the product. Therefore, non-hydrolyzed forms of alginates, carageenans, and pectins, which act as stabilizers and thickeners, would not be acceptable ingredients in mayonnaise. However, when hydrolyzed, the aforementioned alginates, carageenans, and pectins no longer have their stabilizing and thickening properties and, therefore, would not be excluded from the ingredients that could possibly be incorporated into mayonnaise. As described above, it has been discovered that the hydrolysates do have sequestrant properties and would therefore be an acceptable ingredient in a mayonnaise or any other food allowing the addition of a sequestrant.

The hydrolyzed polysaccharide with side chain acid groups of the present disclosure can be incorporated into a lipid containing substance, such as a food or beverage, in an amount effective to reduce oxidation equivalent to EDTA without adversely affecting the organoleptic properties, such as viscosity or yield stress, of the food or beverage even when the lipid containing substance is essentially free of EDTA. For purposes herein, essentially free of EDTA means EDTA is below detectable limits such as 40 ppm or below and preferably none. These hydrolyzed polysaccharides would not be considered as stabilizers or thickeners because the hydrolyzing process removes the ability of the polysaccharide to thicken. However, because of the surprising ability of hydrolyzed polysaccharides with side chain acid groups to sequester iron, they could be incorporated into food products as a sequestrant. By one approach, an effective amount of the hydrolyzed polysaccharide with side chain acid groups may be about 0.2 to about 2.5 weight percent in the food or beverage. As shown above, such levels of non-hydrolyzed polysaccharides would severely impact a food's texture of viscosity. Additionally, as mentioned above, it is noted that not all hydrolyzed polysaccharides will impart oxidative stability. For example, hydrolyzed xanthan gum does not have antioxidation properties because it is believed that such gum does not have sufficient amount of acid side chains to form bonds with the metal ions.

The alginate, carageenan, and pectin may be hydrolyzed using acid hydrolysis or enzymatic hydrolysis. Generally, the polysaccharide sources are on the order of up to about one thousand molecules long. Preferably, the polysaccharide is hydrolyzed such that the average polysaccharide chain length is reduced to about two to about four molecules long. Not wishing to be limited by theory, it is believed that these short chain lengths of polysaccharides, when incorporated into a food or beverage, form divalent bonds with metals in the food or beverage effectively chelating, or sequestering, the metals and preventing oxidation of the food or beverage. However, again not wishing to be limited by theory, it is believed that the relatively short chain length of the hydrolyzed polysaccharides prevent the hydrolyzed polysaccharides from imparting thickening of the food or beverage. Therefore, these hydrolyzed polysaccharides may be added to impart oxidative stability to foods and beverages without adversely affecting the organoleptic properties. Additionally advantageous is that relatively pure forms of non-hydrolyzed alginate, carageenan, and pectin are readily available as starting materials for the hydrolysis. As a result, the resultant hydrolyzed polysaccharide antioxidant includes about 90 percent or more (preferably, at least about 99 percent) of the effective compounds (i.e., the hydrolyzed alginate, carageenan, and pectin) that provide the antioxidant benefit and less than about 10 percent (preferably less than about 1 percent) of non-effective compound.

In another embodiment, the natural ingredient is hydrolyzed egg whites, a natural source, which are incorporated into a food or beverage to provide oxidative stability in place of an artificial or synthetic antioxidant, such as EDTA, while not adversely affecting the organoleptic properties of the food or beverage. Generally, the egg white protein, or albumin, is mechanically separated from the other portions of the egg, such as the shell, membranes, and yolk. The egg white protein is then subjected to hydrolysis. Hydrolysis of the egg white may be performed by any technique known in the art, for example, but not limited to acid hydrolysis and enzymatic hydrolysis to obtain an egg white hydrolysate. Preferably, the hydrolysate is prepared using a neutral proteinase produced by a strain of the genus Aspergillus. Preferably, hydrolysis of the egg white protein is such that the average molecular weight (MW) of the hydrolyzed protein is about 1,100 to about 1,200 MW. The hydrolyzed egg white protein is effective to chelate, or sequester, metal ions similar to EDTA while not adversely affecting the organoleptic properties of a food or beverage when the hydrolyzed egg white protein is incorporated therein.

In another embodiment, the natural antioxidant is an iron-reduced, phosvitin rich ingredient. In general, such natural ingredient is obtained from phosvitin that is precipitated from an egg yolk. The removed phosvitin is iron rich, which results in an egg yolk with at least about an 80 percent reduction of the original iron content. However, with the phosvitin removed, the egg yolk loses some functionality. The presence of egg yolk phosphoproteins, such as phosvitin, may be desired in the egg ingredient as the phosphoproteins may be necessary to enhance the emulsification properties of the egg yolk. Therefore it is desirable to provide a reduced iron egg ingredient still capable of providing emulsification, but also having reduced pro-oxidative activity compared to an untreated egg ingredient. A method of providing such an egg ingredient is provided herein.

In general, there is provided a method to remove the bound iron from the iron-rich phosvitin obtained as a precipitate during the iron reduction of the egg yolk. Preferably, the methods herein do not disrupt the structure of the protein in the process. Once the bound iron is removed from the phosvitin, the phosvitin may be reincorporated into the egg yolk ingredient. By returning the protein to the protein reduced egg yolk, the egg yolk regains many of the properties afforded by the presence of the protein, such as enhancement of emulsification. Surprisingly, by returning the phosvitin to the egg yolk, even if all of the iron has not been removed from the protein component, the reincorporated phosvitin can act as a chelating agent to bind any residual iron remaining in the egg yolk resulting in an increased shelf life compared to products not containing a chelating agent. Furthermore, it is believed that as more iron is removed from the phosvitin protein, reincorporation of the iron reduced phosvitin will have an antioxidant effect on the products; in some cases approaching the stability of the same products containing EDTA.

One method of removing the iron-rich phosvitin from egg yolk to provide the reduced-iron egg yolk is to first combine egg yolk with preferably one volume of distilled water forming a first mixture. The pH of the first mixture is then adjusted from approximately 5.8-6.0 to approximately 6.5-7.0 using a food-grade alkali. Any known food-grade alkali, for example sodium hydroxide, may be used for adjusting the pH. Preferably, the pH of the first mixture is adjusted to about 6.8. Sodium Chloride (NaCl) is then added to the first mixture to increase the ionic strength, preferably at a level of about 0.9 percent. This mixture is then subjected to intense centrifugation, generally about 10,000 x to about 15,000 x g, for approximately 20 to 40 minutes, to precipitate an iron-rich phosvitin fraction. Those skilled in the art will recognize that the time required to recover the iron-rich phosvitin fraction will be shortened by the use of higher centrifugation speeds. The removal of the iron-rich phosvitin fraction from the centrifuged mixture provides an iron-reduced egg yolk with a reduced iron content, typically having 50 percent to 80 percent less iron than in the original egg yolk. The iron-reduced egg yolk can be used "as-is" or may be adjusted to its original pH with the addition of food-grade acid prior to being incorporated into a food or beverage. Alternatively, other methods known in the art may be used to remove protein from the egg yolk, which would include removing the phosvitin along with the iron bound to the phosvitin, thereby providing an egg yolk with a reduced iron content. It is preferred that these methods do not permanently disrupt the three-dimensional structure of the phosvitin protein are useful for this purpose.

As previously noted, there are foods and drinks where the presence of the phosphoproteins, such as phosvitin, in the egg yolk are desired to enhance the emulsification and/or other properties of the egg yolk. As a result, in order to use the phosphoproteins for their functional benefits in such a manner without a detrimental effect on oxidation, the reduction of iron levels in the phosphoproteins are desired prior to reintroducing the phosphoproteins back into the egg yolk. Therefore it is desirable to provide a reduced-iron, phosphoprotein-rich egg yolk.

One method of producing a reduced-iron, phosphoprotein-rich egg yolk includes suspending the iron-rich phosvitin in water, preferably distilled water, at a ratio of about one part of phosvitin precipitate to about two parts of water creating a phosvitin suspension.
This phosvitin suspension is treated to remove its bound iron in one of several ways. In the simplest example, the iron-rich phosvitin can be washed with distilled water through multiple suspensions and decantations / centrifugations or filtering to strip the phosvitin of its iron. The effectiveness of the washing can be improved by, for example, altering the pH to approximately 2.6 to 3.0 by adding a food-grade acidulant. Removal of iron from the phosvitin can also be enhanced by the addition of divalent salts; e.g., calcium chloride (CaCl₂) to compete with iron binding sites on the phosvitin, or by adding a chelator or sequestering agent (or another compound capable of disrupting the phosvitin-iron complex without permanently affecting the structure of the phosvitin protein). Without limiting to any one theory, any treatments that will strip the iron from the phosvitin without substantially affecting the functional properties of this protein fraction would be suitable.

For the method of stripping phosvitin of its iron by the use of a chelator or sequestering agent, preferably, about 0.25 percent to about 0.50 percent of calcium EDTA may be added to the phosvitin suspension. The pH of the suspension may be adjusted to further facilitate the stripping of the iron from the phosvitin protein, for example to a pH of about 2.8. The phosvitin suspension is then held for a period of time and at a temperature sufficient to solubilize a substantial portion of the iron from the phosvitin while preventing microbiological growth or significant denaturation of the protein. Conducting this process under refrigerated conditions of about 4°C for about 20 hours has been found to be effective, although other time / temperature combinations will also work. After soaking, the phosvitin suspension may then be centrifuged or filtered to obtain the phosvitin precipitate having a reduced level of iron. The phosvitin precipitate is then washed with water, preferably, at a ratio of one part precipitate to eight parts of water. The water portion may further contain about 0.5% NaCl or 0.5% CaCl₂ to aid in the washing process. This washing process is preferably repeated multiple times to reduce the iron content of the phosvitin below about 40 ppm and to reduce the content of the chelator or sequestering agent to an acceptable level (such as less than 1 ppm), if used. For example, when EDTA is used as the chelator or sequestering agent, the EDTA content of the phosvitin pellet should be low enough such that when added to the final product, the EDTA levels will fall below detection limits. As such, the product may be at levels that would not require EDTA to be listed in the ingredients of the product.

This phosvitin material can then be re-combined with the iron-reduced egg yolk to provide a reduced-iron, phosphoprotein-rich modified egg yolk including the modified phosvitin. The reduced-iron, phosvitin-rich egg yolk can then be used as an ingredient in a comestible product and has emulsifying properties substantially equivalent to that of untreated egg yolk. Additionally, the treated phosvitin material also acts as a natural chelating agent to bind any residual iron remaining in the earlier described iron-reduced egg yolk, resulting in a modified egg yolk having essentially all of remaining free iron bound to phosvitin and thereby preventing the pro-oxidant property of unbound iron. Incorporating this modified egg yolk including the modified phosvitin into a comestible product will result in increased shelf life compared to products not containing a chelating or sequestering compound. This result is unexpected.

It is surprising that by adding phosvitin, which may still contain amounts of residual iron (i.e., about 40 ppm or below), back into the egg yolk that the added iron does not adversely affect the shelf life of the product. Rather, one would suspect that by adding iron to a comestible product, the added iron would result in an increased amount of oxidation. Not wishing to be limited by theory, it is believed that the phosvitin as modified herein remains complexed to any iron remaining in the iron-reduced phosvitin mixture. Therefore, when this iron-reduced phosvitin mixture is added back into the reduced-iron egg yolk, the phosvitin has the ability to chelate and sequester some or all of any iron remaining in the egg yolk, thereby making any previously unbound iron in the egg yolk unreactive and thus, increasing oxidative stability of the egg yolk. Alternatively, the phosvitin material as modified herein may also be incorporated into a food, drink, or other comestible as a natural chelating agent effective to reduce oxidation.

It is believed that calcium EDTA will remove up to about 90 percent and more preferably about 95 percent of the iron from the phosvitin-iron complex in the process described above. It is also believed that CaCl₂ will remove approximately about 30 percent of the iron from the iron-phosvitin complex when used as a washing liquid at a concentration of about 20 percent in the process described above. Furthermore, it is believed that by adding the iron-reduced or iron-free phosvitin to an iron-reduced egg yolk forming a modified egg yolk prior to being incorporated as an ingredient in a comestible, it will result in the comestible having an extended shelf-life relative to products containing no antioxidants, and in some cases a shelf-life similar to comestibles containing EDTA.

In addition, in one preferred form, an oxidatively stable comestible is provided comprising: a comestible base including an oil phase; a hydrolyzed polysaccharide having a plurality of side chains with carboxylic acid groups blended into the comestible base in an amount effective to provide oxidative stability therein so that the comestible base is oxidatively stable under room temperature conditions for at least 24 weeks; the polysaccharide is hydrolyzed such that the average polysaccharide chain length is about 2 to about 4 molecules and has an average molecular weight of about 300 to about 900 Daltons; and wherein the oxidatively stable comestible is substantially free of EDTA and wherein the hydrolyzed polysaccharide having the plurality of side chains with carboxylic acids groups does not adversely affect organoleptic properties of the oxidatively stable comestible such that a yield stress of the oxidatively stable comestible is within about 10 percent of a yield stress of the comestible base without the hydrolyzed polysaccharide.

In the oxidatively stable comestible, the hydrolyzed polysaccharide may be selected from hydrolyzed alginate, hydrolyzed carageenan, hydrolyzed pectin, or mixtures thereof. Further, in the oxidatively stable comestible, the comestible base may be selected from the group comprising a food, a beverage, and a pharmaceutical. Also, in the oxidatively stable comestible, the oxidatively stable comestible also may be selected from one of a salad dressing or mayonnaise.

Advantages and embodiments of the natural antioxidants described herein are further illustrated by the following examples; however, the particular conditions, processing schemes, materials, and amounts thereof recited in these examples, as well as other conditions and details, should not be construed to unduly limit this method. All percentages are by weight unless otherwise indicated.

### EXAMPLE 1

Aqueous solutions containing iron II were used to determine the ability of hydrolyzed polysaccharides to bind metal ions. Aqueous solutions having iron II present in amounts of 5 ppm (Sample 1),10 ppm (Sample 2), and 20 ppm (Sample 3) were prepared and separated into multiple aliquots. For each of the three iron concentration levels, EDTA or hydrolyzed alginate prepared as described above was added and mixed into the aqueous solution. The samples were then tested for residual free iron II present in the solution using an iron testing kit (EWO-5542-66) from Cole Parmer. As shown in Table 2, the hydrolyzed alginate was effective to bind free iron II present in the aqueous solution, and was comparable to EDTA at the 10 ppm and 20 ppm concentrations.

**Table 2**

| | Sample 1 | Sample 2 | Sample 3 |
|---|---|---|---|
| Compound | residual iron II (ppm) | residual iron II (ppm) | residual iron II (ppm) |
| 5 ppm EDTA | 2 | 4 | 3 |
| 10 ppm EDTA | 2 | 3 | 6 |
| 20 ppm EDTA | 1 | 4 | 5 |
| 875 ppm hydrolyzed alginate | 3 | 4 | 6 |
| 1750 ppm hydrolyzed alginate | 2 | 4 | 6 |
| 3500 ppm hydrolyzed alginate | 3 | 4 | 6 |

### EXAMPLE 2

Kraft Real Mayonnaise (Kraft Foods, Northfield, Illinois) was formulated and separated into multiple samples. One sample was used as a control and had no additional ingredients added. Each of the remaining samples had 0.007 weight percent EDTA, 0.175 weight percent hydrolyzed alginate, or 0.350 weight percent hydrolyzed alginate added and then mixed into the sample. The samples were then subjected to an accelerated shelf-life test where the each sample was incubated for four weeks at 95°F. The samples were then tasted by a trained panel to determine the amount of oxidation that occurred in the samples. The panel evaluated the samples for beany, painty, fishy, and off-flavors. For each of these categories, the samples were scored on a scale of 1 to 10. A score of 1 in each of the categories indicates very little, or no flavor associated with oxidation, while a score of 10 would indicate a very intense flavor associated with oxidation. As shown in Table 3, the samples containing the hydrolyzed alginate had flavor values that were comparable to or improved over the sample containing EDTA. All samples had flavors improved over control. Hence, it was determined that hydrolyzed alginate imparted oxidative stability similar to or better than EDTA. It is believed that hydrolyzed carageenan and hydrolyzed pectin would provide a similar protective effect.

**Table 3**

| Compound (weight %) | Beany (1-10) | Painty (1-10) | Fishy (1-10) | Off-flavor (1-10) |
|---|---|---|---|---|
| 0.007 wt % EDTA | 3.6 | 1.9 | 0.6 | 0.6 |
| 0.175 wt % hydrolyzed alginate | 1.9 | 0.9 | 0.6 | 1.0 |
| 0.350 wt. % hydrolyzed alginate | 1.9 | 0.6 | 0.6 | 1.0 |
| Control | 3.9 | 3.0 | 2.7 | 3.1 |

### EXAMPLE 3

An iron reduced egg yolk was produced by adding one volume of distilled water to egg yolk and adjusting the pH to 6.8 by a food-grade alkali, specifically, NaOH. NaCl was then added at a level of 0.9 percent (to increase the ionic strength) and the mixture was subjected to intense centrifugation to precipitate an iron-rich phosvitin fraction. Removal of the iron-rich phosvitin precipitate results in an egg yolk with at least about 80 percent of its original iron content removed. The iron-reduced egg yolk can be used as-is in some food applications or can be adjusted back to its original pH with the addition of a food-grade alkali before use.

### EXAMPLE 4

An iron-reduced, phosvitin-rich egg yolk was prepared by first re-suspending the iron-rich phosvitin precipitate of Example 1 in distilled water at a ratio of one part phosvitin precipitate to two parts water to which was added 0.5 percent parts of calcium EDTA. The pH of the solution was then adjusted to 2.8. This solution was held at 4°C for 20 hours during which time the iron was effectively stripped from the phosvitin by the higher affinity of EDTA. The solution was then centrifuged to isolate the phosvitin and the phosvitin was subsequently washed with 0.5 percent NaCl solution to flush the EDTA and iron. The centrifugation and washing was repeated multiple times until the iron-content was below 40 ppm and the EDTA content was below an analytical detection limit of 1 ppm to produce phosvitin that is essentially iron-free and EDTA-free. The iron-free, EDTA-free phosvitin material was then reincorporated with the iron-reduced egg yolk from Example 1, providing an iron-reduced, phosvitin-rich egg yolk having emulsifying properties substantially equivalent to that of untreated egg yolk.

### EXAMPLE 5

An iron-reduced, phosvitin-rich egg yolk from Example 2 was incorporated in a ranch-style salad dressing product at a level of 1 percent by weight and its stability against lipid oxidation was analyzed using an Electronic Paramagnetic Resonance (EPR) method. EPR provides an indication of relative stability and shelf-life by measuring the quantity of free radicals formed over a three-day incubation period, with lower levels of free radicals being indicative of greater stability. To conduct the EPR analyses, a Bruker e-scan R instrument (Bruker Corporation, Billerica, MA) was employed and samples were prepared and analyzed as follows:
a) 5-10 glass beads and 50 µL PBN solution, consisting of 200mM of α-phenyl-N-tert-butylnitrone (PBN, Alexis Biochemicals) diluted in Neobee oil, were placed in an empty 20 mL scintillation vial.
b) 5.00 g of fresh and well mixed product sample was placed in the vial with a transfer tube. The vial was closed and mixed thoroughly with the help of a vortex mixer having a flat surface. The vial was incubated at 37 °C.
c) Samples were withdrawn at 24, 48 and 72 hours, using an aspirator, into 50 µL pipets and the bottoms were sealed with Critoseal wax. The vials were returned to the incubator after sampling.
d) For analysis, each pipet was inserted into a 3mm EPR tube and the tube was inserted into the EPR instrument cavity.
e) The EPR instrument, programmed with WIN EPR Acquisition software, generated a spectrum file, which was converted to TEMPOL (free radical) equivalents.

Two controls using identical levels of untreated egg yolk (1 percent by weight) with and without EDTA (70 ppm) were prepared and EPR performance was compared to the test sample. The EPR results in FIG. 1 show that the sample prepared with the iron-reduced, phosvitin-rich egg yolk is considerably more stable than the control product without EDTA although not as stable as the control with 70 ppm EDTA. In FIG. 1, Sample 1 is the control ranch dressing with 1 percent egg yolk and no added sequestrant, Sample 2 is a ranch dressing with 1 percent egg yolk and 70 ppm EDTA, and Sample 3 is ranch dressing with 1 percent iron-reduced, phosvitin rich egg yolk as provided in Example 2. The results demonstrate the effect of iron-reduced, phosvitin-rich egg yolk in retarding lipid oxidation as measured by a reduced level of free radicals.

It will be understood that various changes in the details, materials, and arrangements of the process, formulations, and ingredients thereof, which have been herein described and illustrated in order to explain the nature of the method and resulting natural antioxidants, may be made by those skilled in the art within the principle and scope of the embodied method as expressed in the appended claims.

## Claims

1. A lipid containing substance having antioxidative properties comprising an oil and a hydrolyzed polysaccharide obtained by hydrolysis of one of carageenans, alginates, pectins, or mixtures thereof wherein the hydrolyzed polysaccharide includes carboxylic acid groups and is present in an amount effective to provide oxidative stability to the lipid containing substance so that the lipid containing substance is oxidatively stable under room temperature conditions for at least about 24 weeks when the lipid containing substance is essentially free of EDTA.

2. The lipid containing substance of claim 1, wherein the hydrolyzed polysaccharide has a chain length of about 2 to about 4 glucose units and an average molecular weight of about 300 to about 900 Daltons.

3. The lipid containing substance of claim 1 or claim 2, wherein the effective amount of hydrolyzed polysaccharide is about 2 to about 2.5 weight percent.

4. The lipid containing substance of any of the preceding claims, wherein the lipid containing substance is a mayonnaise or salad dressing product.

5. The lipid containing substance of any of the preceding claims, wherein the hydrolyzed polysaccharide does not substantially thicken the lipid containing substance relative to a lipid containing substance without the hydrolyzed polysaccharide such that a yield stress of the lipid containing substance with the hydrolyzed polysaccharide is within about 10 percent of a yield stress of the lipid containing product without the hydrolyzed polysaccharide.

6. A method of preparing an egg yolk with reduced pro-oxidant properties and an iron-reduced phosvitin therefrom comprising:
(1) providing a volume of egg yolk containing iron;
(2) removing iron-rich phosvitin from the egg yolk resulting in an iron-reduced egg yolk, wherein the phosvitin has a protein structure, and removing the iron-rich phosvitin from the egg yolk does not substantially disrupt the phosvitin structure;
(3) suspending the iron-rich phosvitin in an aqueous solution to form a phosvitin suspension;
(4) centrifuging or filtering the phosvitin suspension to form an iron-reduced phosvitin; and
(5) washing the iron-reduced phosvitin with water to form a washed phosvitin suspension having a reduced iron level to form an iron-reduced phosvitin.

7. The method of claim 6, wherein the iron-reduced phosvitin is re-incorporated back into the iron-reduced egg yolk of step (2) resulting in an iron-reduced, phosvitin-rich egg yolk.

8. The method of claim 6 or claim 7, wherein the removing of iron-rich phosvitin from egg yolk as in step (2) is performed in steps comprising: (a) adding about one volume of water to the volume of egg yolk to form a mixture; (b) adjusting the pH of the mixture to about 6.8 using a food-grade alkali; (c) adding sodium chloride at a level of about 0.9 percent; (d) precipitating an iron-rich phosvitin fraction by subjecting the mixture to intense centrifugation or filtering; and (e) removing the iron-rich phosvitin fraction from the mixture leaving the iron-reduced egg yolk.

9. The method of any of claims 6 - 8, wherein calcium chloride or calcium EDTA are added to the phosvitin suspension.

10. The method of any of claims 6 - 9, wherein suspending the iron-rich phosvitin in an aqueous solution to form a phosvitin suspension includes adding an iron sequestering agent including calcium EDTA and suspending the iron-rich phosvitin at a ratio of one part iron-rich phosvitin to two parts water to about 0.25 to about 0.5 percent parts calcium EDTA.

11. The method of any of claims 6 - 10, wherein the phosvitin suspension is held at about 4°C for about 20 hours.

12. The method of claim 10, wherein steps (4) and (5) are repeated until the iron-reduced phosvitin has an iron content below about 40 ppm and the iron sequestering agent content below about 500 ppm.

13. The method of claim 7, wherein the iron-reduced, phosvitin-rich egg yolk is incorporated into a food or a beverage.

14. The method of claim 6, wherein the iron-reduced phosvitin is directly incorporated into a food or a beverage.

15. The method of claim 7 or claim 13, wherein an iron content of the iron-reduced egg yolk is reduced by at least about 50 percent.
